# EUROPÄISCHE PATENTANMELDUNG

(11) **EP 3 363 293 A1**
(43) Veröffentlichungstag der Anmeldung: **22.08.2018**
(21) Anmeldenummer: 18156958.3
(22) Anmeldetag: 15.02.2018
(51) Int. Cl.: A22B 3/00

(54) **VERFAHREN ZUR ERFASSUNG EINES SCHLACHTTIERRELEVANTEN MERKMALS**

(30) Priorität: 16.02.2017 DE 102017103172
(71) Anmelder: BANSS SCHLACHT- UND FÖRDERTECHNIK GMBH, 35216 Biedenkopf (DE)
(72) Erfinder: Schmidt, Frank, 35232 Dautphetal (DE)
(74) Vertreter: Stoffregen, Hans-Herbert

(57) **Zusammenfassung**

Die Erfindung bezieht sich auf ein Verfahren zur Erfassung von zumindest einem schlachttierrelevanten Merkmal von zumindest einem in einer Gondeln aufweisenden Gasbetäubungsanlage zu betäubenden Schlachttier, das über ein Zutriebssystem einem einem Gondeleingang vorgelagerten ersten Bereich zugeführt wird und in einem Gondelauswurfbereich nach der Betäubung aus einer Gondel ausgeworfen wird, das sich dadurch auszeichnet, dass in dem ersten Bereich zumindest ein Ist-Merkmal als das schlachttierrelevante Merkmal des Schlachttieres optisch erfasst und ausgewertet wird und dass bei Ermittlung von von einer Norm abweichendem Ist-Merkmal eine schlachttierrelevante Eigenschaften beeinflussende Aktion ausgelöst wird und/oder eine Dokumentation betreffend das Schlachttier oder der das Schlachttier enthaltenden Gruppe erfolgt.

## Beschreibung

Die Erfindung bezieht sich auf ein Verfahren zur Erfassung von zumindest einem schlachttierrelevanten Merkmal von zumindest einem zu betäubenden Schlachttier. Dabei wird das Schlachttier insbesondere in einer Gondeln aufweisenden Gasbetäubungsanlage betäubt, das über ein Zutriebsystem einem einem Gondeleingang vorgelagerten ersten Bereich zugeführt wird und in einem Gondelauswurfbereich nach der Betäubung aus einer Gondel ausgeworfen wird.

Der DE 10 2012 100 480 B3 ist ein Verfahren zum Betäuben von Schlachttieren in einer Gasbetäubungsanlage zu entnehmen. Um ein artgerechtes Vor- und Endbetäuben der Schlachttiere zu ermöglichen, werden diese in Gondeln durch Gase unterschiedlicher Zusammensetzungen gefördert.

Bei Gasbetäubungsanlagen ist es üblich, dass Schlachttiere, wie Schweine, gruppenweise über ein Zutriebssystem zum Eingang von Gondeln geführt werden. Das Zutriebssystem kann entsprechend der Anlagenkonfiguration manuell, halb- oder vollautomatisch betätigt werden.

Um ein artgerechtes Betäuben zu ermöglichen, ist darauf zu achten, dass die Schlachttiere auf dem Weg zur Betäubungsanlage stressfrei geführt werden. Dabei sollen die Tiere mittels Treibschilder, die verstellbaren Wänden gleichkommen, wiederum möglichst schonend in die Gondeln der Gasbetäubungsanlagen geführt werden. Die Gondeln selbst werden in Art eines Patemosterprinzips durch das Betäubungsgas geführt.

Da die Qualität des Schlachtfleisches von der Vorbehandlung der Tiere und deren Aktivitäten vor Zuführen in die Betäubungsanlage abhängig ist, wäre es von Vorteil, wenn entsprechende schlachttierrelevante Daten zur Verfügung stehen würden. Auch tierschutzrelevante Informationen könnten von Bedeutung sein.

Der vorliegenden Erfindung liegt die Aufgabe zugrunde, ein Verfahren zuvor genannter Art so weiterzubilden, dass die Möglichkeit besteht, z.B. Behandlung oder Aktivitäten des Schlachttieres vor dessen Betäuben beeinflussen oder Rückschlüsse auf diesbezügliche Tätigkeiten ziehen zu können. Es soll ermöglicht werden, Informationen über den Verarbeitungs- und/oder Schlachtprozess zu erhalten, die für Verbraucher-Informationssysteme nutzbar sind.

Zur Lösung der Aufgabe sieht die Erfindung im Wesentlichen vor, dass zumindest ein Ist-Merkmal als das schlachttierrelevante Merkmal des Schlachttieres optisch erfasst und ausgewertet wird und dass bei Ermittlung von von einer Norm abweichendem Ist-Merkmal eine Bewertung erfolgt und ggf. eine Aktion ausgeführt wird und/oder das schlachttierrelevante Merkmal mit zumindest einer Information aus der Gruppe Herkunft, Mast, Tierhaltung verknüpft wird. Das schlachttierrelevante Merkmal kann direkt oder unter Einbeziehung der Abweichung zwischen Norm (Soll-Wert) und Ist-Merkmal, also indirekt, mit der zweiten Information verknüpft werden.

Vorzugsweise wird das schlachttierrelevante Merkmal in dem ersten Bereich der Gasbetäubungsanlage erfasst.

Insbesondere ist vorgesehen, dass als Ist-Merkmal zumindest ein Merkmal aus der Gruppe Kratzspuren, Hautstriemen, Rückenverletzungen, Kopfverletzungen, Verweilposition des Schlachttieres in dem ersten Bereich ausgewählt wird.

Norm bedeutet insbesondere dabei, dass schlachttierrelevante Merkmale eines unverletzten oder Verhaltensstörungen nicht aufweisenden Schlachttieres zugrundegelegt werden. Ein entsprechendes Schlachttier weist eine makellose Hautoberfläche auf.

Dabei ist insbesondere vorgesehen, dass bei Ermittlung von von der Norm abweichendem Ist-Merkmal dieses dokumentiert wird und eine Beeinflussung von nachfolgend zu betäubenden Schlachttieren in Bezug auf die Eigenschaften der Schlachttiere beeinflussenden Maßnahmen erfolgt. Dabei wird als Maßnahme zumindest eine aus der Gruppe Herkunft, Tierhaltung, Tiertransport, Zutriebssystem, Prozess- und Qualitätsoptimierung zur Verbesserung des Tierschutzes vor und während der Schlachtung ausgewählt.

Insbesondere werden aus den Ist-Informationen bzw. der Differenz zur Norm Daten (zweite Daten) generiert, die einem Datensatz (erste Daten) zugeführt werden, der dem Schlachttier selbst zugeordnet ist, mittels dessen eine Rückverfolgbarkeit des Schlachttieres in Bezug auf zumindest Herkunft, insbesondere aber auch Haltung und Transport, ermöglicht wird. Eine transparente Rückverfolgbarkeit zum Zeitpunkt des Betäubens wird ermöglicht.

Des Weiteren besteht die Möglichkeit, dass den ersten und zweiten Daten bzw. Datensätzen weitere Daten zugefügt werden, die Informationen über Betäuben und/oder Schlachten und/oder Verarbeiten des geschlachteten Tieres enthalten. Somit ist eine Rückverfolgbarkeit, von Geburt bis zum Endprodukt für den Verbraucher möglich.

Insbesondere ist vorgesehen, dass aus dem ersten und zweiten Datensatz und insbesondere unter Berücksichtigung der weiteren Daten ein Code, wie Barcode, generiert wird, der zumindest eine verbraucherspezifische Informationen aus der Gruppe Herkunft, Aufzucht, Ort der Schlachtung, Verarbeitung, Ort der Verarbeitung des Schlachttieres beinhaltet.

Insbesondere ist durch den Vergleich zwischen Norm- und optisch erfasstem Ist-Merkmal des der Betäubung zuzuführenden Schlachttieres die Möglichkeit gegeben, in Abhängigkeit von der Abweichung eine Klassifizierung vorzunehmen, die dem dem Schlachttier zugeordneten Datensatz hinzugefügt werden kann. Es kann z. B. eine Tierschutzklassifizierung mit Klassen 1 .... N mit z. B. N = 10 erfolgen, wobei N = 10 einem der Norm entsprechenden Schlachttier und N = 1 einem mangelhaften Schlachttier entsprechen kann. Die entsprechenden Daten können sodann im Verbraucherinformationssystemen genutzt werden, so dass die lückenlose Information über z.B. Herkunft und/oder Aufzucht und/oder Mast und/oder Schlachtbetrieb und/oder Tierschutzklassifizierung, die einer Animal-Welfare-Bewertung gleichkommt, dem Verbraucher liefert.

Bei schlecht klassifizierten Schlachttieren kann eine Rückkopplung insoweit erfolgen, dass Aufzucht und/oder Mast und/oder Transport und/oder Schlachtbetrieb beeinflusst werden.

Die Erfassung des Ist-Merkmals und der Vergleich mit der Norm führt automatisch zu einem Datensatz, der mit Klassifizierungskriterien beinhaltenden Daten verglichen werden, die in einem Rechner abgelegt sind.

Z. B. Anzahl und Fläche von Kratzspuren oder Hautstriemen können mit einer Bildverarbeitung ausgewertet werden und sodann entsprechend in der Datenverarbeitung klassifiziert werden. Gleiches gilt z. B. für Rücken- und/oder Kopfverletzungen. Das Schlachttier wird optisch erfasst und so ermittelte Daten werden automatisch ausgewertet und mit zuvor definierten Kriterien verglichen.

Die Erfindung dient zum Monitoring und zur Dokumentation tierschutzrelevanter Merkmale zum Zeitpunkt des Eintretens in eine Betäubungsanlage zur Schlachtung von Nutztieren. Diese Daten werden sodann gesondert ausgewertet und mit festgelegten Kriterien verglichen oder aber einem Datensatz zugeführt, der die Möglichkeit einer Rückverfolgbarkeit des Schlachttieres insbesondere in Bezug auf Herkunft, Aufzucht, Mast und/oder Schlachtbetrieb enthält.

Der Erfindung liegt die Idee zugrunde, dass eine automatische und insbesondere lückenlose Erfassung von sichtbaren Merkmalen des Schlachttieres, also schlachttierrelevanten Merkmalen, erfolgt, so dass aus diesen Rückschlüsse hinsichtlich tierschutzgerechter Haltung, Transport und Behandlung gezogen werden können. Stellt sich heraus, dass Merkmale des Schlachttieres erfasst werden, die von der Norm abweichen, so können hieraus Rückschlüsse z.B. über Haltung des Schlachttieres, dessen Transport und/oder Behandlung mit der Folge gezogen werden, dass eine Beeinflussung zumindest initiiert wird, um Veränderungen vorzunehmen, damit von der Norm abweichende Merkmale nicht mehr auftreten.

Dabei nutzt man die Kenntnis, dass insbesondere in der Vorbucht vor der Betäubungsanlage die Schlachttiere ruhig gestellt sind, so dass die sich dem Grunde nach nicht bewegenden Schlachttiere von oben, also aus der Vogelperspektive, gut erfassbar sind. Anlagenbedingt ist der Vorbuchtbereich, also der erste Bereich, auch gut ausgeleuchtet.

Unter Einsatz eines Auswerte- und/oder Dokumentationssystems, das einen die Schlachttiere erfassende optischen Sensor wie Kamera einschließt, können Daten den Datensätzen zugeführt werden, die bereits den Schlachttieren bzw. den Schlachttiergruppen zugeordnet sind.

Schlachttierrelevante Merkmale, die erfasst werden können, sind z.B. Kratzspuren und Striemen auf der Haut, die durch unsachgemäße Treibhilfsmittel, gegenseitiges Beißen, mangelhafte Transporteinrichtungen, unsachgemäße Haltung im Mastbetrieb verursacht sein können. Auch offene Verletzungen am Rücken und im vorderen/oberen Kopfbereich sind erfassbar.

Aber auch ein abnormales Verhalten wie z. B. Hinsetzen oder Hinlegen aufgrund von Verletzungen oder Krankheiten an den Gliedmaßen werden erfasst und die so ermittelten, von der Norm abweichenden Ist-Merkmale können zur Beeinflussung der Haltung oder des Transports zukünftig zu schlachtender Tiere herangezogen werden.

Wird eine Abweichung von der Norm, also eine Soll-/Ist-Wert-Abweichung festgestellt, kann eine Dokumentation der Auffälligkeiten und Bewertung des Zustandes des jeweiligen Schlachttieres in tierschutzrelevante Kategorien erfolgen. Die Einhaltung und Umsetzung von tierschutzrelevanten Merkmalen wird somit messbar und entsprechende Optimierungsmaßnahmen können objektiv evaluiert werden.

Bevorzugterweise werden jedoch diese Daten (Soll-/Ist-Wert-Vergleich bzw. -Abweichung) bereits dem jeweiligen Schlachttier zugeordneten Datensatz zugefügt, so dass eine transparente Rückverfolgbarkeit bis zum Ursprung des Schlachttieres erfolgen kann.

Insbesondere zeichnet sich die Erfindung dadurch aus, dass Anzahl der in eine Gondel eingetriebenen Schlachttiere mit der aus der Gondel ausgeworfenen Schlachttieren verglichen und bei fehlender Übereinstimmung ein Signal und eine Aktion generiert wird. Als Aktion ist das Anhalten der Anlage zu nennen, um das festhängende Tier zu entfernen. Anschließend muss eine Bestätigung vom Bediener erfolgen, damit die Anlage erneut in Betrieb gesetzt werden kann.

Die Erfindung zeichnet sich daher auch durch ein Verfahren aus, bei dem Schlachttiere in eine Gondel einer Gasbetäubungsanlage eingetrieben und in einem Gondelauswurfbereich nach der Betäubung aus der Gondel ausgeworfen werden, wobei Anzahl der in die Gondel eingetriebenen Schlachttiere mit der Anzahl der aus der Gondel ausgeworfenen Schlachttieren mittels Bildverarbeitung verglichen und bei fehlender Übereinstimmung ein Signal und eine Aktion generiert wird. Hierbei handelt es sich um eine einen selbstständigen Schutz begründende Lehre.

Die Gondeln werden dabei insbesondere nach dem Paternosterprinzip durch eine Betäubungsgas wie CO₂ enthaltende Grube geführt, wie dies z. B. der DE 101 14 974 A1 zu entnehmen ist.

So können mit einer ersten und einer zweiten Kamera die Anzahl der in die Gondel eingetriebenen Schlachttiere, wie Schweine, und mit einer zweiten Kamera die Anzahl der ausgeworfenen Schlachttiere erfasst werden, um festzustellen, ob alle Tiere aus der Gondel ausgeworfen worden sind; denn in der Praxis kommt es vor, dass Schlachttiere beim Auswurf in der Gondel hängen bleiben und somit weitertransportiert werden. Infolgedessen wird bei der Beladung der entsprechenden Gondel die vorgeschriebene Mindestfläche pro Schlachttier nicht eingehalten. Auch wird die Qualität des Schlachttierkörpers durch die doppelte Zeit an Betäubungsgas negativ beeinflusst.

Nach einem eigenständigen Lösungsvorschlag ist vorgesehen, dass die Schlachttiere über zumindest ein angetriebenes Treibschild in den ersten Bereich und/oder in die Gondel geführt werden und dass Stellgröße zum Betätigen des Treibschilds Daten von Arbeitsablauf in dem Zutriebssystem und/oder schlachttierrelevante Daten des Schlachttieres zugeordnet werden. Dabei ist Stellgröße zumindest ein Wert aus der Gruppe Stromaufnahme, Kraft, Drehzahl, Drehmoment als charakteristischer Wert zum Betätigen des Treibschilds auszuwählen.

Im Bereich des Zutriebs können folglich gleichfalls tierschutzrelevante Merkmale dokumentiert, aufgezeichnet und erfasst werden. Man nutzt die Eigenschaft, dass der Antrieb des Treibschilds z.B. über einen Servoantrieb erfolgt, der drehzahl-, kraft- oder drehmomentabhängig angesteuert werden kann.

Aus den diesbezüglichen Werten können sodann Rückschlüsse gezogen werden, wie häufig ein Treibschild nach Erreichen einer vorgegebenen maximalen Krafteinleitung zum Stillstand gelangt, um sodann Rückschlüsse ziehen zu können, wie gut oder wie schlecht der Zutriebsbereich funktioniert. Auch können indirekt Rückschlüsse über die Qualität des Personals im Zutriebsbereich gezogen werden, um eine Beeinflussung und ggf. Schulung des Personals vornehmen zu können. Aber auch Rückschlüsse auf die Schlachttiere selbst können gezogen werden, ob diese z.B. zu dem ersten Bereich "stressfrei" geführt werden oder Widerstand leisten.

Insbesondere zeichnet sich die Erfindung durch die Verfahrensschritte aus:
- optisches Erfassen eines Ist-Merkmals des Schlachttieres,
- Vergleichen des Ist-Merkmals mit einer Norm,
- bei Abweichung des Ist-Merkmals von der Norm:
   - Auslösen einer Dokumentation betreffend das Schlachttier oder der zugehörigen Gruppe von Schlachttieren, und/oder
   - Ermittlung von Tierhaltung und/oder Transport und/oder Führung des Schlachttieres oder der Gruppe, und/oder
   - Auslösen von die Tierhaltung und/oder den Transport und/oder die Führung betreffenden Handlungen.

Insbesondere und selbstständig schutzbegründend zeichnet sich die Erfindung durch die Verfahrensschritte aus:
- optisches Erfassen eines Ist-Merkmals des Schlachttieres,
- Vergleich des Ist-Merkmals mit einer Norm,
- Generieren eines Datensatz (zweite daten) aus dem Vergleich,
- Hinzufügen des Datensatzes zu dem Schlachttier zugeordneten Daten (erste Daten), die zumindest Herkunft und/oder Aufzucht und/oder Mast beinhalten,
- Generieren von Daten (dritte Daten) und/oder Informationen aus den ersten und zweiten Daten zur Rückverfolgung des Schlachttieres.

Die dritten Daten können gegebenenfalls mit Daten verknüpft werden, die auf der Basis zumindest einer Information aus der Gruppe Betäuben, Schlachten, Verarbeitung, Ort der Verarbeitung generiert worden sind. Sodann kann z.B. ein lesbarer oder auslesbarer Code, wie Dotcode oder Barcode, erzeugt werden, um eine Rückverfolgbarkeit zu ermöglichen. Selbstverständlich kann bereits aus den dritten Daten ein entsprechender Code erzeugt werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines bevorzugten Ausführungsbeispiels.

Es zeigen:
- Fig. 1: eine Prinzipdarstellung einer Gasbetäubungsanlage und

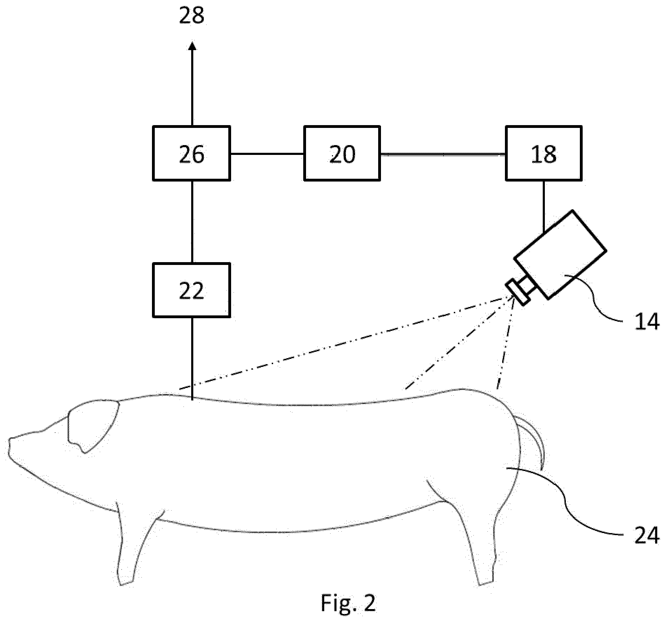

- Fig. 2: eine Prinzipdarstellung zur Datengewinnung.

Wird im Ausführungsbeispiel die Erfindung im Zusammenhang mit einer Gasbetäubungsanlage erläutert, die nach dem Paternosterprinzip durch eine ein Betäubungsgas enthaltende Grube geförderte Gondeln aufweist, in der zu betäubende Schlachttiere eingetrieben sind, so wird hierdurch die erfindungsgemäße Lehre nicht eingeschränkt.

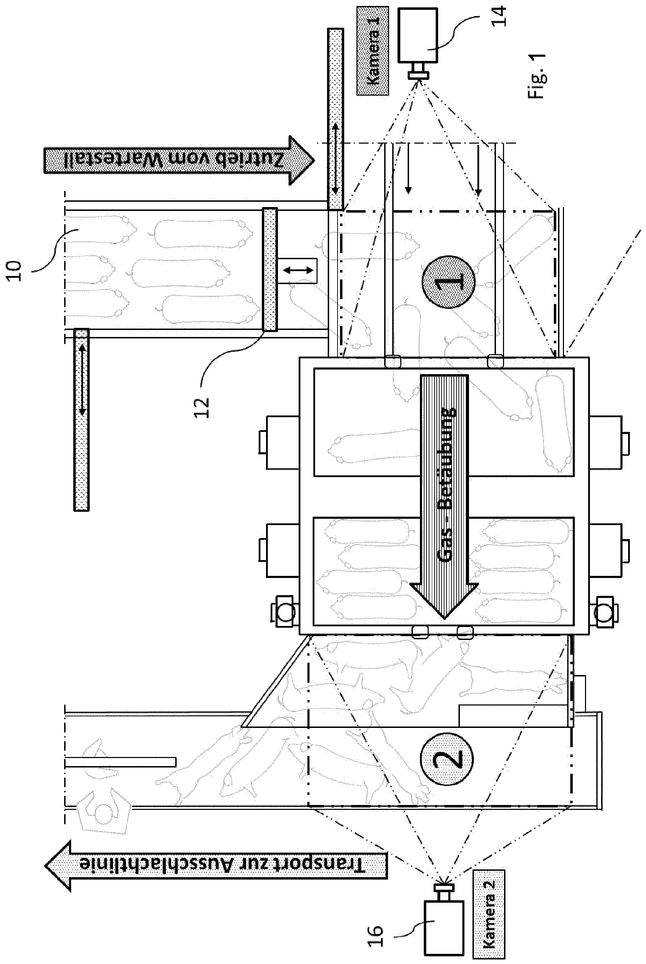

In Fig. 1 ist in Prinzipdarstellung ein Zutrieb- und Auswurfbereich einer Gasbetäubungsanlage im Schnitt dargestellt. Im rechten Teil der Fig. ist ein Zutriebgang B prinzipiell dargestellt, durch den Schlachttiere 10 einer als erster Bereich bezeichneten Vorbucht 1 zugeführt werden, von der aus Schlachttiere 10 in eine Gondel D der Gasbetäubungsanlage eingetrieben werden.

Die Bewegung der Schlachttiere 10 durch den seitlich begrenzten Zutriebgang B erfolgt mittels sogenannter Treibschilder 12, die auch als bewegliche Wände bezeichnet werden können. Wie sich aus der zeichnerischen Darstellung ergibt, werden Schlachttiere 10 mittels z. B. einer verstellbaren Trennwand (Doppelpfeil) voneinander separiert, um sodann in Gruppen der Vorbucht 1 zugeführt zu werden. Insoweit wird auf hinlänglich bekannte Techniken verwiesen.

Der erste Bereich oder die Vorbucht 1 wird mittels einer Kamera 1 (14) überwacht, um von den sich in der Vorbucht 1 befindlichen Schlachttieren 10 schlachttierrelevante Merkmale optisch zu erfassen und sodann zu bewerten. Hierzu gehören Kratzspuren und Striemen auf der Tierhaut, offene Verletzungen am Rücken oder im vorderen bzw. oberen Kopfbereich, aber auch das Verhalten des Schlachttieres in der Vorbucht 1, ob dieses also steht oder sich hinsetzt oder hinlegt.

Die entsprechenden optisch erfassten und mittels einer Software ausgewerteten Merkmale werden sodann mit Soll-Merkmalen verglichen, die Schlachttieren zugeordnet sind, die ein normales Verhalten zeigen und unverletzt sind. Die entsprechenden Soll-Merkmale entsprechen somit einer Norm, nach der das zu schlachtende Tier eine makellose Hautoberfläche ohne Rötungen, Verletzungen, Bissspuren usw. aufweisen sollte.

Zeigen sich Abweichungen zwischen Ist- und Soll-Merkmalen, so werden diese dokumentiert und den Schlachttieren bzw. Gruppen zugeordnet, wodurch wiederum eine Zuordnung z.B. zum Transport der Schlachttiere, deren Haltung oder sonstige schlachttierrelevante Tätigkeiten erfolgen kann. Somit kann eine Beeinflussung der diesbezüglichen Tätigkeiten wie Tierhaltung, Transport etc. für zukünftig zu schlachtende Tiere erfolgen, um zu vermeiden, dass bei nachfolgenden Schlachtprozessen Schlachttiere betäubt werden, die nicht gewünschte schlachttier- bzw. tierschutzrelevante Merkmale aufweisen, die z.B. auch Rückschlüsse über nichtartgerechtes Halten bzw. Behandeln bieten können. Z. B. eine Prozessoptimierung, Mitarbeiter-Schulung und/oder Tierschutzverbesserung kann initiiert werden.

Insbesondere werden aus dem Vergleich der Soll-Ist-Werte mittels z.B. einer Bildverarbeitung 18 (zweite) Daten 20 generiert und einem Datensatz 22 (erste Daten) zugefügt, der dem Schlachttier 24 bereits zuvor zugeordnet ist. Die ersten und zweiten Daten werden mit einer geeigneten Software in einem Rechner 26 ausgewertet, um somit eine transparente Rückverfolgbarkeit bis zum Betäuben zu ermöglichen. Die aus dem Vergleich ermittelten Daten 28 ermöglichen eine "Tierschutz-Klassifizierung", so dass Verbrauchern letztendlich Daten 28 zur Verfügung stehen, die eine Bewertung des Schlachttieres 24 vom Ursprung bis zum Schlachten ermöglichen.

Eine "Tierschutz-Klassifizierung" könnte auch allein auf der Basis der zweiten Daten 20 erfolgen.

Nachdem die Schlachttiere 10 in der Gondel D in bekannter Weise, insbesondere nach dem Paternosterprinzip, durch das Betäubungsgas geführt worden sind, werden diese im Bereich 2 ausgeworfen. Dieser Bereich wird durch eine Kamera 2 (16) erfasst, um einen Vergleich zwischen der Anzahl der in die Gondel D eingetriebenen und der nach Durchfahren des Betäubungsgases aus der entsprechenden Gondel D herausgeworfenen Schlachttiere vorzunehmen. Sollte die Zahl nicht übereinstimmen, ist der Schluss zu ziehen, dass ein betäubtes Schlachttier in der Gondel verblieben ist, so dass entsprechend ein Signal wie Alarm ausgelöst oder eine Aktion eingeleitet werden, um das sich noch in der Gondel befindende Schlachttier zu entfernen. Hierdurch ist sichergestellt, dass stets eine leere Gondel beim Eintreiben von zu betäubenden Schlachttieren zur Verfügung steht.

Ein selbstständiges erfinderisches Merkmal, das losgelöst von der optischen Erfassung von schlachttierrelevanten Merkmalen Schutz genießt, findet sich in der Überwachung der Treibschilder 12. Der Antrieb der Treibschilder 12 erfolgt üblicherweise über Servoantriebe, die sehr sensibel drehzahl-, kraft- und/oder drehmomentabhängig angesteuert werden können. Diese Funktionen werden bereits benutzt, damit gesetzlich vorgeschriebene Richtwerte hinsichtlich der maximal anzuwendenden Kräfte im Zutriebsbereich von Betäubungsanlagen eingehalten werden. Erfindungsgemäß werden nunmehr aus zumindest einer der für den Antrieb charakteristischen Werte Rückschlüsse gezogen, inwieweit ein ordnungsgemäßes Funktionieren im Treibgang gewährleistet ist, ob also z.B. die Schlachttiere "freiwillig" den Treibgang durchlaufen oder durch Kontakt mit dem Treibschild angetrieben werden müssen und in welchem Umfang, oder wie gut oder schlecht der Zutriebsbereich funktioniert oder auch organisiert ist, um auf diese Weise die Qualität der Mitarbeiter im Zutriebsbereich zu ermitteln und gegebenenfalls Schulungsmaßnahmen einzuleiten, um den Betrieb besser zu gestalten; denn ein häufiges Anhalten des Treibschildes lässt den Schluss z.B. einer nicht optimalen Bedienung oder fehlender Aktivitäten der Schlachttiere zu.

## Patentansprüche

1. Verfahren zur Erfassung von zumindest einem schlachttierrelevanten Merkmal von zumindest einem zu betäubenden Schlachttier (10, 24), vorzugsweise einem in einer Gondeln (D) aufweisenden Gasbetäubungsanlage zu betäubenden Schlachttier (10, 24), das über ein Zutriebssystem einem einem Gondeleingang vorgelagerten ersten Bereich (1) zugeführt wird und in einem Gondelauswurfbereich (2) nach der Betäubung aus einer Gondel ausgeworfen wird,
**dadurch gekennzeichnet,**
**dass** vorzugsweise in dem ersten Bereich (1) zumindest ein Ist-Merkmal als das schlachttierrelevante Merkmal des Schlachttieres (10, 24) optisch erfasst und ausgewertet wird und dass bei Ermittlung von von einer Norm abweichendem Ist-Merkmal eine schlachttierrelevante Eigenschaften beeinflussende Aktion ausgelöst wird und/oder eine Dokumentation betreffend das Schlachttier oder der das Schlachttier enthaltenden Gruppe erfolgt und/oder das schlachttierrelevante Merkmal direkt oder indirekt mit zumindest einer Information aus der Gruppe Herkunft, Mast, Tierhaltung verknüpft wird.

2. Verfahren nach Anspruch 1,
**dadurch gekennzeichnet,**
**dass** dem Schlachttier (24) ein erster Datensatz (22) zugeordnet ist, der zumindest eine Information aus der Gruppe Herkunft, Aufzucht, Mast, Schlachtbetrieb enthält und dass dem ersten Datensatz ein aus der optischen Erfassung des Ist-Merkmals bzw. der Differenz zur Norm generierten zweiten Datensatz (20) verknüpft wird.

3. Verfahren nach Anspruch 1 oder 2,
**dadurch gekennzeichnet,**
**dass** dem ersten und zweiten Datensatz (22, 20) weitere Daten zugefügt werden, die Informationen über Betäuben und/oder Schlachten und/oder Verarbeiten des geschlachteten Tieres enthalten.

4. Verfahren nach zumindest einem der vorhergehenden Ansprüche,
**dadurch gekennzeichnet,**
**dass** aus dem ersten und zweiten Datensatz (22, 20) und insbesondere unter Berücksichtigung der weiteren Daten ein Code, wie Dotcode oder Barcode, generiert wird, der zumindest eine verbraucherspezifische Information aus der Gruppe über zumindest Herkunft, Aufzucht, Ort des Schlachtens, Verarbeitung, Ort der Verarbeitung des Schlachttieres beinhaltet.

5. Verfahren nach zumindest einem der vorhergehenden Ansprüche,
**dadurch gekennzeichnet,**
**dass** als Ist-Merkmal zumindest ein Merkmal aus der Gruppe Kratzspur, Hautstriemen, Rückenverletzung, Kopfverletzung, Verweilposition des Schlachttieres (10) in dem ersten Bereich (1) ausgewählt wird.

6. Verfahren nach zumindest einem der vorhergehenden Ansprüche,
**dadurch gekennzeichnet,**
**dass** bei Ermittlung von von der Norm abweichendem Ist-Merkmal eine Aktion zur Beeinflussung von zukünftig zu betäubenden Schlachttieren (10) in Bezug auf Eigenschaften des Schlachttiers beeinflussenden Maßnahmen ausgelöst wird.

7. Verfahren nach zumindest einem der vorhergehenden Ansprüche,
**dadurch gekennzeichnet,**
**dass** als Maßnahme zumindest eine aus der Gruppe Tierhaltung, Tiertransport, Zutriebssystem ausgewählt wird.

8. Verfahren nach vorzugsweise einem der vorhergehenden Ansprüche,
**dadurch gekennzeichnet,**
**dass** Anzahl der in eine Gondel (D) eingetriebenen Schlachttiere (10) mit aus der Gondel ausgeworfenen Schlachttieren mittels Bildverarbeitung verglichen und bei fehlender Übereinstimmung ein Signal und eine Aktion generiert wird.

9. Verfahren nach vorzugsweise einem der vorhergehenden Ansprüche,
**dadurch gekennzeichnet,**
**dass** das Schlachttiere (10) über zumindest ein angetriebenes Treibschild (12) dem ersten Bereich (1) und/oder der Gondel (D) zugeführt wird, wobei eine Stellgröße zum Betätigen des Treibschilds Daten von Arbeitsablauf in dem Zutriebssystem und/oder schlachttierrelevante Daten des Schlachttieres zugeordnet werden.

10. Verfahren nach zumindest Anspruch 9,
**dadurch gekennzeichnet,**
**dass** als Stellgröße zumindest ein Wert aus der Gruppe Stromaufnahme, Kraft, Drehzahl, Drehmoment als charakteristischer Wert zum Betätigen des Treibschildes ausgewählt wird.

11. Verfahren nach vorzugsweise einem der vorhergehenden Ansprüche,
**gekennzeichnet durch** die Verfahrensschritte:
- optisches Erfassen eines Ist-Merkmals des Schlachttieres (10),
- Vergleich des Ist-Merkmals mit einer Norm,
- bei Abweichung des Ist-Merkmals von der Norm:
- Auslösen einer Dokumentation betreffend das Schlachttier oder der zugehörigen Gruppe von Schlachttieren, und/oder
- Ermittlung von Tierhaltung und/oder Transport und/oder Führung des Schlachttieres oder der Gruppe, und/oder
- Auslösen von die Tierhaltung und/oder den Transport und/oder die Führung betreffenden Handlungen.

12. Verfahren nach vorzugsweise einem der vorhergehenden Ansprüche,
**gekennzeichnet durch** die Verfahrensschritte:
- optisches Erfassen eines Ist-Merkmals des Schlachttieres (24),
- Vergleich des Ist-Merkmals mit einer Norm,
- Generieren eines Datensatz (20) aus dem Vergleich,
- Hinzufügen des ersten Datensatzes zu dem Schlachttier zugeordneten Daten (22), die zumindest Herkunft und/oder Aufzucht und/oder Mast beinhalten,
- Generieren von Daten (28) und/oder Informationen zur Rückverfolgung des Schlachttieres.
